# EUROPÄISCHE PATENTSCHRIFT

(11) **EP 0 883 533 B1**
(45) Veröffentlichungstag und Bekanntmachung des Hinweises auf die Patenterteilung: **21.11.2001**
(21) Anmeldenummer: 97908216.1
(22) Anmeldetag: 12.03.1997
(51) Int. Cl.: B60S 1/08

(54) **ANTRIEBSVORRICHTUNG FÜR SCHEIBENWISCHER MIT EINEM PARKSTELLUNGSSCHALTER**
WINDSCREEN WIPER DRIVE DEVICE WITH A PARK POSITION SWITCH
DISPOSITIF D'ENTRAINEMENT POUR ESSUIE-GLACE MUNI D'UN COMMUTATEUR D'ARRET FIXE

(30) Priorität: 14.03.1996 DE 19609973
(43) Veröffentlichungstag der Anmeldung: 16.12.1998
(73) Patentinhaber: Valeo Auto-Electric Wischer und Motoren GmbH, 74321 Bietigheim-Bissingen (DE)
(72) Erfinder: LEITER, Heinz, D-74376 Gemmrigheim (DE); LÖSCH, Dieter, D-97999 Igersheim (DE)
(74) Vertreter: Dreiss, Fuhlendorf, Steimle & Becker
(86) Internationale Anmeldenummer: EP9701238
(87) Internationale Veröffentlichungsnummer: WO9733779

(56) Entgegenhaltungen:
- EP-A- 0 398 630
- US-A- 4 700 026

## Beschreibung

Die Erfindung bezieht sich auf eine Antriebsvorrichtung für einen Scheibenwischer mit einem Parkstellungsschalter gemäß dem Oberbegriff des Anspruchs 1.

Aus der US-A-4,700,026 eine Vorrichtung für eine Parkstellung eines Scheibenwischers bekannt geworden. Diese Vorrichtung sitzt auf der Antriebswelle für ein Hebelgestänge, so dass die Kontaktbrücke permanent mitgenommen wird, was einen hohen Verschleiß verursacht.

Eine Antriebsvorrichtung gemäß den Merkmalen des Oberbegriffs ist in der EP-A-0 398 630 beschrieben. Die Kontaktbrücke ist als verschiebbares Element im Deckel des Getriebegehäuses dargestellt, das mittels Nocken am Schneckenrad zwischen zwei Positionen hin- und hergeschoben werden kann. Die Kontaktbrücke weist dazu einen Steg auf, der in einem entsprechenden Schlitz im Gehäusedeckel geführt ist.

Bei dieser Anordnung ist es schwierig, die Kontaktbrücke gegen Herausfallen zu sichern, außerdem bereitet es Probleme, eine entsprechende Vorspannung zu erzeugen, um die Kontaktbrücke in ausreichendem Kontakt zu den Gegenkontakten zu bringen.

Die Erfindung schlägt daher eine Antriebsvorrichtung vor, die die Merkmale des Anspruchs 1 aufweist.

Bei dieser Anordnung kann die Kontaktbrücke durch einen einfachen Sicherungsring auf dem Zapfen gesichert werden. Auβerdem kann eine ausreichende Vorspannung erzeugt werden, indem zwischen Kontaktbrücke und Sicherungsring eine Feder angeordnet wird.

Vorzugsweise wird die Kontaktbrücke aus einem Blech gefertigt werden, von dem zwei Kontaktlaschen derart abgeknickt werden, daß die Abschlußkanten der Laschen auf entsprechende Kontaktbahnen im Gehäuse gleiten.

Die beiden Kontaktbahnen werden am besten diametral gegenüber der Schwenkachse angeordnet, wobei sie vorzugsweise in etwa den gleichen Abstand zur Schwenkachse aufweisen.

Um die Kontaktbrücke verschwenken zu können, werden aus dem Blech zwei Schaltlaschen abgeknickt, deren Knickkanten in etwa auf Linien liegen, die durch den Schwenkpunkt verlaufen. Diese Schaltlaschen wirken mit Nocken auf dem Abtriebszahnrad des Wischergetriebes zusammmen. Vorzugsweise liegen die Schaltlaschen zu beiden Seiten einer gedachten Linie zwischen den Kontaktlaschen.

Insbesondere bei Getriebegehäusen aus Kunststoff ist es von Vorteil, den Schalter im bzw. auf dem Gehäuseboden anzuordnen. Dabei werden die zu kontaktierenden Kontaktbahnen im Boden des Gehäuses geführt, wobei diese bündig mit der Innenseite des Gehäusebodens abschließen. Die Kontaktbahnen werden an einem Ende durch den Motorflansch in den Motor und an anderem in ein am Getriebegehäuse angeordnetes Steckergehäuse geführt.Der Schwenkzapfen wird einstückig mit dem Kunststoffgehäuse ausgebildet.

Die Erfindung wird anhand von zwei Figuren erläutert.

Dabei zeigt die
- Fig. 1: eine Antriebseinheit zum Teil im Schnitt, zum Teil in Draufsicht mit einem Parkstellungsschalter und der dazugehörigen Beschaltung; und die
- Fig. 2: einen Schnitt entlang der Linie II-II.

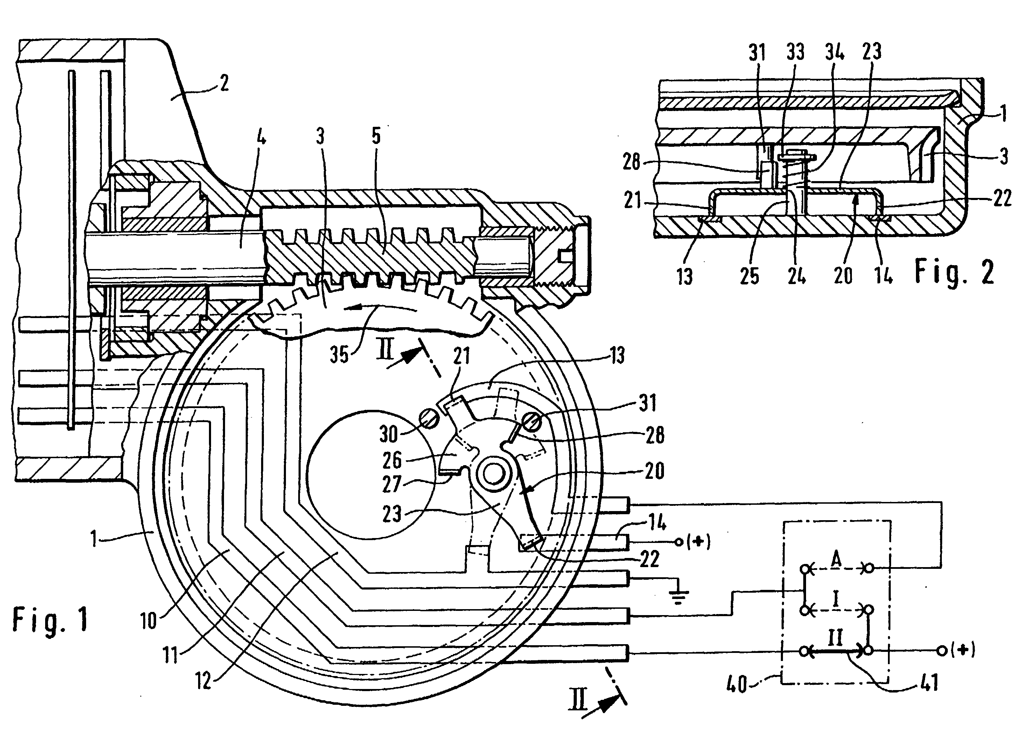

Die Fig. 1 zeigt das topfförmige Gehäuse 1 eines Getriebes einer Antriebsvorrichtung, an dem seitlich ein Motorflansch 2 einstückig angeformt ist. Im topfförmigen Gehäuseteil liegt ein Schneckenrad 3, das hier quasi durchsichtig dargestellt ist, so daß der Blick auf den Boden des Gehäuses freigegeben ist.

Das Schneckenrad ist mit einer Abtriebswelle verbunden, mit der ein oder mehrere Scheibenwischarme pendelnd angetrieben werden. Durch das Zentrum des Flansches 2 erstreckt sich die Ankerwelle 4 eines angeflanschten Elektromotors, wobei an die Ankerwelle 4 eine Schnecke 5 angeformt ist, die mit der Verzahnung des Schneckenrades 3 kämmt.

Bei dem Elektromotor handelt es sich um einen Gleichstrom-Kommutatormotor, der mit drei Bürsten versehen ist, die über die Kontaktbahnen 10,11,12 mit Strom versorgt werden. Die Ausstattung des Motors mit drei Bürsten ermöglicht es, ihn in zwei Geschwindigkeitsstufen I,II zu betreiben. Dazu ist eine erste Bürste über die Kontaktbahn 12 ständig mit dem Grundpotential der Spannungsversorgung verbunden. Über eine weiter Kontaktbahn 11 kann eine zweite Bürste, die der ersten Bürste am Kollektor diametral gegenüberliegt, mit Strom versorgt werden. Wenn dies der Fall ist, läuft der Motor in der Geschwindigkeitsstufe I.

Über eien dritte Kontaktbahn 10 kann eine dritte Bürste mit Spannung versorgt werden, die gegenüber der zweiten Bürste um einen bestimmten Winkel versetzt ist. Wird der Motor über diese Bürste mit Strom versorgt, so läuft er in der Geschwindigkeitsstufe II. Dabei gilt, daß die Drehzahl des Motors in der Geschwindigkeitsstufe I kleiner ist als in der Geschwindigkeitsstufe II.

Wie man der Fig. 1 entnehmen kann, verlaufen die Kontaktbahnen 10,11,12 im Boden des Gehäuses und schließen bündig mit der inneren Oberfläche des Bodens ab.

Um die Kontaktbahn 10,11,12 unmittelbar im Gehäuse anordnen zu können, ist es natürlich notwendig, daß das Gehäuse aus Kunststoff gefertigt wird. Ist dies nicht der Fall, so muß eine entsprechende Kunststoffplatte, die die Kontaktbahnen trägt, in den Boden des Gehäuses eingelegt werden.

Die jeweils einen Enden der Kontaktbahnen 10,11,12 führen durch den Flansch 2 in das Innere des Motors und werden dort in geeigneter Weise mit den Bürsten des Motors elektrisch leitend verbunden. Die Darstellung erfolgt hier sehr schematisch, da die Durchführung der Kontaktbahnen in das Motorgehäuse nicht Gegenstand der Erfindung ist. Entsprechendes gilt für die jeweils anderen Enden der Kontaktbahnen, die seitlich aus dem Gehäusetopf 1 herausgeführt sind und ggf. zu einem Steckergehäuse, das einstückig mit dem Gehäuse 1 ausgebildet ist, führen. Auch dies ist hier nicht näher dargestellt, da dies nicht der eigentliche Gegenstand der Erfindung ist.

Bei dem Antrieb von Scheibenwischern stellt sich nun allgemein das Problem, daß auch nach Abschalten der Wischanlage durch den Fahrer der Motor zumindest noch so lange mit Strom versorgt werden soll, bis sich die Wischer wieder in ihren Parkstellungen am unteren Rand der Windschutzscheibe befinden.

Um dies zu erreichen, wird in den Antriebsvorrichtungen für Scheibenwischeranlagen ein sogenannter Parkstellungsschalter eingebaut, der von der Antriebsvorrichtung selbst in der Weise betätigt wird, daß der Antriebsmotor bis zum Erreichen der Parkstellung der Scheibenwischer noch mit Strom versorgt wird, auch wenn der vom Fahrer zu betätigende Hauptschalter schon auf "Aus" ist.

Im vorliegenden Fall besteht der Schalter aus einer Kontaktbrücke 20, die schwenkbar über dem Gehäuseboden gelagert ist. Die Brücke, die elektrisch leitend ist, weist zwei Kontaktlaschen 21,22 auf, wobei die eine Kontaktlasche 21 unabhängig von der Winkellage der Kontaktbrücke eine Kontaktbahn 13 kontaktiert. Die andere Kontaktlasche 22 kontaktiert je nach Winkellage der Kontaktbrücke 20 entweder die Kontaktbahn 12, die ständig mit dem Grundpotential der Versorgungsspannung verbunden ist, oder aber eine weitere Kontaktbahn 14, die ständig mit dem Plus-Potential der Versorgungsspannung verbunden ist.

Die Kontaktbrücke 20 wird, was weiter unten noch näher erläutert werden soll, mittels zwei Nocken 30,31 betätigt, die seitlich aus der Seitenfläche des Schneckenrad 3 in axialer Richtung hervorragen.

Die Antriebsvorrichtung wird nun über einen Hauptschalter, der vom Fahrer zu betätigen ist, mit Strom versorgt. Dieser weist eine Schaltbrücke 41 auf, die drei Positionen A, I und II annehmen kann. In der Position II verbindet die Schaltbrücke den Pluspol der Spannungsversorgung mit der Kontaktbahn 10, so daß der Motor in der Geschwindigkeitsstufe II läuft. In der Position I verbindet die Schaltbrücke 41 die Kontaktbahn 11 mit dem Pluspol der Versorgungsspannung, so daß der Motor in der Geschwindigkeitsstufe I läuft.

In der Position A verbindet die Schaltbrücke 41 die Kontaktbahn 11 mit der Kontaktbahn 13. Je nach Winkellage der Kontaktbrücke 20 besteht nun eine Verbindung zum Pluspol oder zum Grundpotential der Versorgungsspannung. Besteht eine Verbindung zum Grundpotential, was nur der Fall ist, wenn die Wischer in ihren Parkstellungen sind, so ist der Motor kurzgeschlossen und die Scheibenwischer werden nicht angetrieben. Befindet sich die Kontaktbrücke 20 in einer zweiten Position, bei der die Kontaktbahn 14 mit der Kontaktbahn 13 verbunden ist, so wird der Motor mit Spannung versorgt, d.h. er dreht sich solange weiter, bis der Nocken 30 auf dem Schneckenrad 3 die Kontaktbrücke 20 verschwenkt, so daß eine Verbindung zwischen der Kontaktbahn 13 und der Kontaktbahn 12 hergestellt wird.

Die Kontaktbrücke 20 besteht aus einem Blech aus elektrisch leitendem Werkstoff, das in der Draufsicht in etwa die Form eines Kreuzes hat. In der Mitte des Längsstückes 23 des Kreuzes befindet sich eine Bohrung 24, durch die ein aus dem Boden des Gehäuses 1 herausragender Zapfen 25 geführt ist. Dieser Zapfen 25 bildet die Schwenkachse der Kontaktbrücke 20.

Die Enden des Längsstückes 23 sind abgeknickt, so daß sich Kontaktlaschen 21,22 bilden, deren Abschlußkanten unmittelbar auf den Kontaktbahnen 12,13,14 aufliegen.

Dabei kann auf sonst übliche Kontaktnieten verzichtet werden, da durch die erfindungsgemäße Konstruktion die von den Kontakten zurückgelegten Wege innerhalb der Lebensdauer der Antriebsvorrichtung gegenüber herkömmlichen Ausbildungen deutlich reduziert ist.

Die Knickkanten der Laschen 21,22 verlaufen tangential zu einem gedachten Kreis um die Schwenkachse der Kontaktbrücke 20.

Das Querstück 26 der kreuzförmigen Kontaktbrücke 20 ist als Teilkreis um die Schwenkachse ausgebildet, wobei die Enden ebenfalls abgeknickt sind und Schaltlaschen 27,28 bilden, die mit den Nocken 30,31 auf dem Schneckenrad 3 zusammenwirken. Die Knickkanten der Schaltlaschen 27,28 verlaufen in etwa auf einer gedachten Linie durch die Schwenkachse. Die Abmessungen der Kontaktbrücke und die Anordnungen der Nocken 30,31 sind so gewählt, daß die jeweils eine Nocke 30,31 beim wegdrücken der zugehörigen Schaltlasche 27,28 die Kontaktbrücke 20 so verschwenkt, daß die jeweils andere Schaltlasche 28,27 in die Bewegungsbahn der jeweils anderen Nocke 31,30 gelangt. Dadurch wird mit jeder Drehung des Schneckenrades 3 die Kontaktbrücke 20 einmal hin- und hergeschwenkt.

Die Befestigung der Kontaktbrücke 20 auf den Zapfen 25 erfolgt mittels eines Sicherungsrings 33. Zwischen dem Sicherungsring 33 und der Kontaktbrücke 20 ist eine Schraubenfeder 34 (oder Biegefeder) angeordnet, die dafür sorgt, daß die Kontaktlaschen 21,22 auf die zugehörigen Kontaktbahnen gedrückt werden. Da in diesem Ausführungsbeispiel die Hebelarme für die Kontaktbrücken 21,22 gleich groß gewählt worden sind, ergeben sich gleich große Kontaktkräfte.

Um die Funktionsweise des Parkstellungsschalters noch einmal zu erläutern, wird angenommen, daß der Motor in der Geschwindigkeitsstufe II betrieben wird. Das Schneckenrad 3 dreht sich dabei in Richtung des Pfeiles 35. Die Schaltnocke 31 hat gerade die Kontaktbrücke 20 in die voll dargestellte Position gedrückt und läuft jetzt an der Schaltlasche 28 vorbei. Wird nun der Hauptschalter 40 vom Fahrer betätigt und die Schaltbrücke 41 in die Position A gebracht, erfolgt die Stromversorgung des Motors über den Strompfad: Plus-Pol der Spannungsversorgung, Kontaktbahn 14, Kontaktbrücke 20, Kontaktbahn 13, Schaltbrücke 41 in der Position A und Kontaktbahn 11. Der Motor wird somit in der Schaltstufe I betrieben. Dies hat zur Folge, daß sich das Schneckenrad 3 weiter in Richtung des Pfeiles 35 bewegt, bis der Schaltnokken 30 in Anlage an die Schaltlasche 27 gelangt, die sich in seiner Bewegungsbahn befindet.

Diese Position des Schneckenrades 3 entspricht einer Position der Scheibenwischer kurz vor ihrer Parkstellung. Beim Weiterdrehen wird die Kontaktbrücke 20 in der Darstellung der Fig. 1 im Uhrzeigersinn verschwenkt, bis die Kontaktlasche 22 die Kontaktbahn 14 verläßt, so daß die Stromversorgung des Motors unterbrochen wird. Aufgrund der im Antrieb gespeicherten Bewegungsenergie läuft der Motor weiter, wodurch die Kontaktbrücke 20 weiter verschwenkt wird, bis die Schaltlasche 22 die Kontaktbahn 12 kontaktiert, wodurch es zu einem Kurzschluß kommt, bei dem der Motor als Generator arbeitet und dadurch rasch abgebremst wird.

In dieser Position liegt die Schaltnocke 31 unmittelbar vor der gestrichelt dargestellten Schaltlasche 28. Bei einer erneuten Strombeaufschlagung des Motors wird die Kontaktbrücke 20 zurückgestellt, so daß beim Abschalten des Elektromotors, während sich die Scheibenwischer noch in ihrem Schwenkbereich befinden, auch nach Lösen des Hauptschalters 40 eine Stromversorgung erfolgen kann, bis die Wischer ihre Parkstellung erreicht haben.

Abschließend sei angemerkt, daß diese Art eines Parkstellungsschalters auch das Problem löst, das auftritt, wenn die Wischer nicht in ihre Parkstellung gebracht werden können, z.B. weil sich Schnee auf der Windschutzscheibe befindet. Bei herkömmlichen Schaltern hat dies den Effekt, daß sich die Wischarme, während sich der Motor weiter dreht, verspannen und sobald der Motor durch Betätigung des Parkstellungsschalters ausgeschaltet wird, die in den Wischern gespeicherte Spannung den Motor zurückdrehen, so daß eine erneute Strombeaufschlagung des Motors erfolgt.

Dies kann mit einem Parkstellungsschalter nach der Erfindung nicht passieren, da in diesem Fall der gegen die Pfeilrichtung 35 laufende Nocken 30 sich lediglich von der Kontaktbrücke entfernt, diese aber nicht wieder zurückschaltet.

Um zu vermeiden, daß sich die Kante der Kontaktlasche, die von einer Kontaktbahn zur anderen wechselt, in den Kunststoff des Gehäuses eingräbt, kann vorgesehen werden, daß zwischen den beiden Kontaktbahnen auf der Bewegungsbahn der Kontaktlasche eine gegenüber den anderen Kontaktbahnen isolierte Gleitbahn eingesetzt wird. Wählt man den Abstand zwischen der Gleitbahn und den Kontaktbahnen kleiner als die Längsausdehnung der Abschlußkante der Kontaktbahn, kann erreicht werden, daß diese stets zumindest zum Teil entweder auf einer Kontaktbahn oder auf der Gleitbahn liegt.

## Patentansprüche

1. Antriebsvorrichtung für einen Scheibenwischer mit einem Parkstellungsschalter mit im Gehäuse bzw. Gehäusedeckel fixierten Kontaktbahnen und einer relativ im Gehäuse zwischen zwei Positionen verstellbaren Kontaktbrücke (20) des Parkstellungsschalters, wobei die Kontaktbrücke (20) über Nocken (30, 31) am Antriebszahnrad (3) der Antriebsvorrichtung verstellbar ist, und das Antriebszahnrad (3) von einem Elektromotor mit wenigstens zwei Bürsten angetrieben wird, wobei eine erste Bürste über eine Kontaktbahn (12) mit dem Grundpotential der Versorgungsspannung und eine zweite Bürste über eine weitere Kontaktbahn (11) nach Abschalten der Antriebsvorrichtung unabhängig von der Winkellage der Kontaktbrücke (20) mit dieser verbunden sind, **dadurch gekennzeichnet, daß** die Kontaktbrücke (20) verschwenkbar im Gehäuse bzw. im Gehäusedeckel auf einem Zapfen (25) gelagert ist und die Kontaktbrücke (20) je nach ihrer Winkellage entweder nach Abschalten der Antriebsvorrichtung bzw. in einer ersten Geschwindigkeitsstufe (I) über eine weitere Kontaktbahn (14) mit dem Pluspotential der Versorgungsspannung oder in der Parkstellung der Scheibenwischer über die eine Kontaktbahn (12) mit dem Grundpotential der Versorgungsspannung verbindbar ist.

2. Antriebsvorrichtung nach Anspruch 1, **dadurch gekennzeichnet, daß** die Kontaktbrücke (20) einstückig aus einem Blech besteht, von dem zwei Kontaktlaschen (21,22) senkrecht abgeknickt sind, wobei die Abknickkanten in etwa tangential zu einem gedachten Kreis um die Schwenkachse liegen.

3. Antriebsvorrichtung nach Anspruch 1 oder 2, **dadurch gekennzeichnet, daß** von der Kontaktbrücke (20) zwei Schaltlaschen(27,28) abgeknickt sind, wobei sich die beiden Schaltlaschen zu beiden Seiten einer gedachten Verbindungslinie zwischen den Kontaktlaschen befinden.

4. Antriebsvorrichtung nach einer der vorhergehenden Ansprüche, **dadurch gekennzeichnet, daß** die Abknickkanten der Schaltlaschen auf einer gedachten Linie durch die Schwenkachse der Kontaktbrücke (20) führen.

5. Antriebsvorrichtung nach einem der vorhergehenden Ansprüche, **dadurch gekennzeichnet, daß** der Schwenkzapfen (25) einstückig mit dem Gehäuse der Antriebsvorrichtung ausgebildet ist und die von der Kontaktbrücke zu kontaktierenden Kontaktbahnen im Boden des Gehäuses verlaufen.

6. Antriebsvorrichtung nach einem der vorhergehenden Ansprüche, **dadurch gekennzeichnet, daß** die Abschlußkanten der Kontaktlaschen (21,22) unmittelbar auf den Kontaktbahnen im Gehäuse aufliegen.

7. Antriebsvorrichtung nach einem der vorhergehenden Ansprüche, **dadurch gekennzeichnet, daß** die Kontaktbrücke (20) mittels eines Sicherungsrings (33) auf einem Zapfen (25) gesichert ist, wobei zwischen dem Sicherungsring (33) und der Kontaktbrücke (20) eine Schraubenfeder (34) oder Biegefeder oder allgemein federndes Element koaxial zum Zapfen (25) angeordnet ist.

## Claims

1. A driving mechanism for a windscreen wiper with a park position switch having contacts fixed within the case or within the lid thereof, and a contact bridge (20) of the park position switch relatively displaceable in the case between two positions, with the contact bridge (20) being displaceable via cams (30, 31) on the driving gear wheel (3) of the driving mechanism, and the driving gear wheel (3) is driven by an electrical motor having at least two brushes, a first brush is connected with base potential of the supply voltage via a contact bank (12) and a second brush is connected with the contact bridge (20) via a further contact bank (11) after the stop of the driving mechanism and independent on the angular position of the contact bridge (20), **characterized in that** the contact bridge (20) is pivotally located on a pin (25) within the case or within the lid thereof and the contact bridge (20) depending on its angular position is connectable via a further contact bank (14) the positive potential of the supply voltage either after stopping of the driving mechanism or in a first speed gear (I) or is connectable via a contact bank (12) with base potential of the supply voltage in a parking position of the windscreen wipers.

2. A driving mechanism according to claim 1, **characterized in that** the contact bridge (20) is integrally formed of a plate of which two contact tags (21, 22) are bent in the vertical direction, with the bending edges being arranged in approximately tangential relationship to an imaginary circle about the swivel axis.

3. A driving mechanism according to claims 1 or 2, **characterized in that** two switch flaps (27, 28) are bent from the contact bridge (20), with the two switch flaps being located at both sides of an imaginary line between the contact tags.

4. A driving mechanism according to any one of the preceding claims, **characterized in that** the bending edges of the switch flaps are guided on an imaginary line through the swivel axis of the contact bridge (20).

5. A driving mechanism according to any one of the preceding claims, **characterized in that** the tilting pin (25) is integrally formed with the case of the driving mechanism, and that the contact banks to be contacted by the contact bridge extend in the bottom of the case.

6. A driving mechanism according to any one of the preceding claims, **characterized in that** the closing edges of the contact tags (21, 22) directly superpose the contact banks within the case.

7. A driving mechanism according to any one of the preceding claims, **characterized in that** the contact bridge (20) is locked by means of a locking ring (33) on a pin (25), with a helical spring (34) or a flexible spring or a generally resilient element being arranged in coaxial relationship to the pin (25) between the locking ring (33) and the contact bridge (20).

## Revendications

1. Dispositif d'entraînement pour un essuie-glace, comportant un interrupteur d'arrêt fixe avec des pistes de contact fixées dans le boîtier ou le couvercle de boîtier, et un pont de contact (20) de l'interrupteur d'arrêt fixe, mobile par rapport au boîtier entre deux positions, le pont de contact (20) étant déplacée par l'intermédiaire de cames (30, 31) de la roue dentée d'entraînement (3) du dispositif d'entraînement, et la roue dentée d'entraînement (3) étant entraînée par un moteur électrique comportant au moins deux balais, un premier balai étant relié, par une piste de contact (12), au potentiel de base de la tension d'alimentation, et un deuxième balai étant relié au pont de contact (20), par l'intermédiaire d'une autre piste de contact (11), après coupure du dispositif d'entraînement, indépendamment de la position angulaire du pont de contact (20), **caractérisé en ce que** le pont de contact (20) est monté sur un axe (25), de manière à pouvoir pivoter dans le boîtier ou dans le couvercle de boîtier, et le pont de contact (20) pouvant être relié, suivant sa position angulaire, soit après coupure du dispositif d'entraînement ou dans un premier cran de vitesse (I), par une autre piste de contact (14), au potentiel plus de la tension d'alimentation, soit en position d'arrêt fixe de l'essuie-glace, au potentiel de base de la tension d'alimentation, par l'intermédiaire de ladite une piste de contact (12).

2. Dispositif d'entraînement selon la revendication 1, **caractérisé en ce que** le pont de contact (20) est réalisé d'une seule pièce dans une tôle dont deux pattes de contact (21, 22) sont repliées verticalement, les bords de pliage se situant à peu près tangentiellement à un cercle imaginaire autour de l'axe de pivotement.

3. Dispositif d'entraînement selon la revendication 1 ou 2, **caractérisé en ce que** du pont de contact (20) sont repliées deux pattes de commutation (27, 28), les deux pattes de commutation se trouvant des deux côtés d'une ligne de liaison imaginaire entre les pattes de contact.

4. Dispositif d'entraînement selon l'une des revendications précédentes, **caractérisé en ce que** les bords de pliage des pattes de commutation sur une ligne imaginaire passent par l'axe de pivotement du pont de contact (20).

5. Dispositif d'entraînement selon l'une des revendications précédentes, **caractérisé en ce que** le pivot (25) est réalisé d'une seule pièce avec le boîtier du dispositif d'entraînement et les pistes de contact, qui doivent entrer en contact avec le pont de contact, s'étendent dans le fond du boîtier.

6. Dispositif d'entraînement selon l'une des revendications précédentes, **caractérisé en ce que** les bords de terminaison des pattes de contact (21, 22) reposent directement sur les pistes de contact, dans le boîtier.

7. Dispositif d'entraînement selon l'une des revendications précédentes, **caractérisé en ce que** le pont de contact (20) est bloqué sur un tourillon (25), au moyen d'une bague de blocage (33), un ressort hélicoïdal (34) ou ressort de flexion ou un élément généralement élastique étant disposé coaxialement au tourillon (25), entre la bague de blocage (33) et le pont de contact (20).
